# EUROPEAN PATENT APPLICATION

(11) **EP 1 348 742 A2**
(43) Date of publication of application: **01.10.2003**
(21) Application number: 03251600.7
(22) Date of filing: 15.03.2003
(51) Int. Cl.: C09D 5/03, C09D 163/02, C09D 167/02

(54) **Coating powders, methods of manufacture thereof, and articles formed therefrom**

(30) Priority: 28.03.2002 US 368850
(71) Applicant: ROHM AND HAAS COMPANY, Philadelphia, Pennsylvania 19106-2399 (US)
(72) Inventor: Spera, Michael L., Mohnton, Pennsylvania 19540 (US); Fedeyko, Joseph M., Reading, Pennsylvania 19607 (US)
(74) Representative: Kent, Venetia Katherine

(57) **Abstract**

Coating powders comprising a solid, particulate film-forming composition and encapsulated catalysts provide stable one-part compositions. The film-forming composition can be a low-temperature cure coating powder such as a carboxylic acid functional polymer/epoxy curative coating powder or a polyester resin/epoxy curative coating powder. The encapsulated catalyst can be a catalyst suitable for the coating powder used such as a substituted imidazole.

## Description

### BACKGROUND

This disclosure relates to coating powders, and methods for the enhanced storage and cure of coating powders.

Coating powders are dry, finely divided, free-flowing solid materials at room temperature. Conventional coating powders require high temperatures to fuse and cure, and are thus limited to substrates such as metals that can withstand high temperatures. A number of coating powders for heat-sensitive substrates such as wood, fiberboard, and some plastics have been developed, for example that disclosed in U.S. Patent No. 6,294,610 to Daly et al.

A particular challenge in the manufacture and use of coating powders for heat-sensitive substrates is that the difference between the extrusion temperature of the coating powder and the curing temperature of the powder is small, which can result in some curing during extrusion. Another drawback is that when one-part coating powders contain catalysts to decrease curing time and temperature, solid-state reaction between the catalyst and resin particles can lead to decreased storage stability. Accordingly, there remains a need for coating powders with increased storage stability, particularly for coating powders that cure at low temperature.

### BRIEF SUMMARY

In a first aspect, there is provided a coating powder composition comprising a solid, particulate film-forming composition and an encapsulated catalyst. The encapsulated catalyst provides for enhanced stability during extrusion, particularly for low temperature cure coating powders. It also provides for enhanced storage stability of the coating powders

In a second aspect, there is provided a method for forming a powder coating comprising contacting a substrate with a coating powder composition comprising a solid, particulate film-forming polymer component and an encapsulated catalyst to form a film; and curing the film to form a powder coating.

In a third aspect, there is provided an article formed by the process of contacting a substrate with a coating powder composition comprising a solid, particulate film-forming polymer component and an encapsulated catalyst to form a film; and curing the film.

### DETAILED DESCRIPTION

As used herein, a coating powder means a solid, particulate, film-forming composition, whereas a powder coating means the film formed on a substrate by curing a coating powder. Coating powders usually comprise a solid thermoplastic or thermosetting film-forming polymer resin. A number of different thermoplastic resins for coating powders are known, for example vinyl chloride, polyamides, celluloses, polyolefins, polyethylene, and polyesters. Thermosetting film-forming resins contain reactive functional groups, an optional curing agent (crosslinking agent) having functional groups reactive with the functional groups of the polymer resin (and which may itself be another film-forming polymer), and an optional catalyst. Known thermosetting resins include but are not limited to acid-functional polyester resins, acid-functional acrylic resins, epoxy resins, and hydroxy-functional polyester resins.

Preferred polymer resins are low temperature cure thermosetting resins suitable for use with heat-sensitive substrates such as wood, fiberboard, and some plastics. Low temperature cure compositions generally cure at temperatures less than 325°F (163°C), preferably less than 300°F (149°C), most preferably less than 275°F (135°C). Cure is also generally greater than about 100°F (39°C), more preferably greater than 200°F (93°C) to provide storage and processing stability.

One example of a suitable coating powder composition capable of cure at low temperatures comprises an acid functional polymer such as carboxylic acid functional polyester or a carboxylic acid functional acrylic resin, a polyepoxy compound, and an optional catalyst. As described in U.S. Patent No. 6,294,610 to Daly, et al., the combined functionality comprising the carboxylic acid functionality of the carboxylic acid polymer and the epoxy functionality of the polyepoxy compound is preferably at least five, more preferably at least 7.

Useful carboxylic acid-functional polyester resins are linear or branched, being formed from polyols and poly-functional carboxylic acids (or monomers having both hydroxyl and carboxylic acid functionality).

Examples of suitable polyols for forming the acid-functional polyester include 1,2-ethanediol, 1,3-propanediol, 1,4-butanediol, 1,6-hexanediol, 1,10-decanediol, 1,12-dodecanediol, 1,4-cyclohexanedimethanol, diethylene glycol, triethylene glycol, neopentyl glycol, trimethylolpropane, hydrogenated bisphenol A (2,2-(dicyclohexanol)propane), 2,2,4-trimethyl-1,3-pentanediol, 2-methyl-1,3-propanediol, 2-methyl-2-hydroxymethyl-1,3-propanediol, 2-ethyl-2-hydroxymethyl-1,3-propanediol, and the like, and combinations comprising at least one of the foregoing polyols.

Suitable polycarboxylic acids include succinic acid, adipic acid, azelaic acid, sebacic acid, 1,12-dodecanedioic acid, terephthalic acid, isophthalic acid, trimesic acid, tetrahydrophthalic acid, hexahydrophthalic acid, 1,4-cyclohexanedicarboxylic acid, trimellitic acid, naphthalene dicarboxylic acid, and the like, and combinations comprising at least one of the foregoing polycarboxylic acids.

To obtain carboxyl-functional polyesters of desired molecular weight, the monomer mixture used to form the polyester has an appropriate excess of carboxyl functionality to hydroxyl functionality. The polyesters are relatively short, having a weight averaged molecular weight (Mn) of 2,000 to 7,000 AMU, preferably 2,000 to 5,000 AMU, an acid functionality of 1.5 to 4.0, preferably 2 to 2.5, an acid number of 15 to 200 mg KOH/g, preferably 25 to 90 mg KOH/g, and a glass transition temperature (Tg) of at least 40°C, preferably at least 50°C, more preferably at least 65°C. The polyesters may range from amorphous to crystalline. Suitable carboxylic acid-functional polyesters are commercially available and include, for example, ALFTALAT® AN 783 from Vianova Resins, having an acid number of 34, a Tg of 52°C, and a melt viscosity of 45-55 poise at 200°C; and RUCOTE® 911 from Ruco Polymers, having an acid number of 35, a Tg greater than 55°C, and a melt viscosity of 15 poise at 200°C.

Useful carboxylic acid-functional acrylic polymers have acid numbers from 15 to 200, the high acid number of the acrylic polymers promoting rapid cross-linking and thereby low temperature curing. The Mn of suitable carboxylic acid-functional acrylic polymers is typically about 1000 to 20,000 AMU and the Tg is 40°C to 65°C. Mixtures of carboxylic acid functional acrylic polymers may be used.

Carboxylic acid functional acrylic polymers are typically derived by reaction of a mixture of acid functional monomers and non-acid functional monomers. Exemplary acid functional monomers are acrylic acid, methacrylic acid, maleic acid, fumaric acid, and citraconic acid. Mixtures comprising at least one of the foregoing monomers may be used.

Non-acid functional monomers include esters, diesters, triesters and tetraesters of acrylic acid or methacrylic acid, wherein the alcoholic constituent of the ester group is, for example, methanol, 2-ethyl hexanol, n-butanol, n-hexanol, 2-hydroxy ethanol, octanol, 2-ethoxy ethanol, t-butanol, 1,5-pentanediol, N,N-diethylaminoethanol, ethylene glycol, butylene glycol, 1,3-propanediol, decamethylene glycol, 1,4-cyclohexanediol, triethylene glycol, 2,2-propane diol, glycerol, tripropylene glycol, 2,2-di(p-hydroxyphenyl)propane, polyoxyethyl-2-2-di(p-hydroxyphenyl)-propane, polyoxypropyltrimethylol propane, , 1,2,4-butanetriol, 2,2,4-trimethyl-1,3-pentanediol dimethacrylate, pentaerythritol, trimethylol propane, and 1,4-benzenediol, and the like; styrene and substituted styrene, such as 2-methyl styrene and vinyl toluene; and vinyl esters, such as vinyl acrylate and vinyl methacrylate and mixtures comprising at least one of the foregoing monomers.

A polyepoxy compound is also present, such that the stoichiometric ratio of the epoxy functionality of the polyepoxy compound to the carboxylic acid functionality of the carboxylic acid functional resin is preferably from 0.7 to 1.3, more preferably from 0.8 to 1.2. The compounds have epoxy functionalities of at least two, preferably at least 3, up to 16. Suitable polyepoxy compounds include heterocyclic polyepoxides having two or more epoxides, such as triglycidylisocyanurate (TGIC); polyepoxides of aromatic polyols such as the diglycidyl ether of 2,2-bis(4-hydroxylphenyl)propane (bisphenol A), bisphenol F, and tetrabromobisphenol A, and the like; low molecular weight polymers derived from the foregoing aromatic polyols and their diglycidyl ethers; cycloaliphatic polyepoxides, such as 3',4'-epoxycyclohexylmethyl 3,4-epoxycyclohexylcarboxylate, dicyclopentadiene dioxide, and the like; glycidyl esters of aromatic or aliphatic polyacids, such as the diglycidyl ester of hexahydrophthalic acid; low equivalent weight epoxy-functional acrylic resins; polyepoxides of aliphatic polyols such as the diglycidyl ether of 1,4-butanediol; and polyepoxides of amino-alcohols, such as the tri-glycidyl ether-amine of 4-amino phenol.

Preferred polyepoxy compounds for low temperature cure compositions include glycidyl esters of aromatic and aliphatic polyacids, for example glycidyl esters of polyacids such as terephthalic, isophthalic, phthalic, methylterephthalic, trimellitic, pyromellitic, adipic, sebacic, succinic, malic, fumaric, tetrahydrophthalic, methyltetrahydrophthalic, hexahydrophthalic, and methylhexahydrophthalic acid. These acids may be copolymerized with other alpha, beta-ethylenically unsaturated monomers, for example esters of acrylic acid or methacrylic acid, such as methyl, ethyl, hexyl, 2-ethoxy ethyl, t-butyl, 2-hydroxyethyl, and 2,2-di(p-hydroxy)phenyl esters, and the like; styrene; substituted styrene such as alpha-methyl styrene; and vinyl esters, such as vinyl acrylate and vinyl methacrylate.

Other preferred polyepoxy compounds, especially for low temperature cure compositions, are epoxy-functional acrylic or methacrylic resins such as glycidyl acrylate or glycidyl methacrylate copolymer (collectively, "GMA") resins. GMA resins are typically obtained from 5 to 30 wt% of glycidyl acrylate or glycidyl methacrylate and 80 to 95 wt% of methyl methacrylate, wherein up to about 50 wt% of the methyl methacrylate can be replaced by another alpha, beta-unsaturated monomer, e.g., styrene, acrylonitrile, and the like. Suitable GMA resins have epoxy equivalent weights of about 200 to about 1000, preferably about 200 to about 600, and an Mn of 200 to about 2000 atomic mass units (AMU) as determined by gel permeation chromatography. They are solid at room temperature, having melting points above about 40°C, preferably a softening point of about 50 to about 75°C, and a Tg of about 40 to about 60°C.

Although the resins are self-curing, the addition of a catalyst to accelerate cure may be useful to raise the curing rate to a commercially desirable value. When present, the catalyst may be used in an amount of 0.1 to 30 parts by weight per 100 parts by weight of the combined acid functional polymer and polyepoxy compound. Catalysts are known, and include, for example, phosphonium compounds such as ethyl triphenyl phosphonium bromide. A particularly suitable catalyst is a tetrasubstituted organoborate salt having the formulae 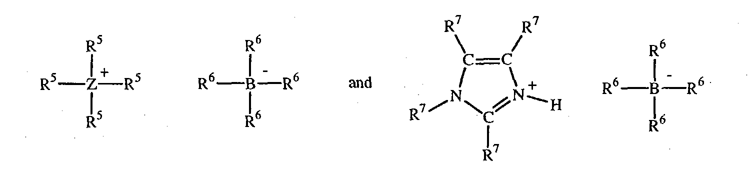 wherein Z is P, As, or N; each R⁵ is independently C₁-C₁₂ alkyl, C₂-C₁₂ alkenyl, C₆-C₁₈ aryl, C₇-C₁₈ arylalkyl, C₇-C₁₈ alkylaryl, or the like; each R⁶ is independently C₁-C₁₂ alkyl, C₆-C₁₈ aryl, C₇-C₁₈ arylalkyl, C₇-C₁₈ alkylaryl, Br, Cl, I, F, or the like; and each R⁷ is independently hydrogen, C₁-C₁₂ alkyl, C₂-C₁₂ alkenyl, C₆-C₁₈ aryl, C₇-C₁₈ arylalkyl, C₇-C₁₈ alkylaryl, C₂-C₁₂ acyl, aldehyde, carboxylate, cyano, nitro, or the like. Specific examples of these compounds and methods for their preparation are provided in U.S. Patent No. 3,859,379 to Kitamura et al.

Another example of a suitable coating powder composition capable of cure at low temperatures comprises an epoxy thermosetting resin, hereinafter referred to as an epoxy resin, and an optional catalyst. The Tg of the epoxy resin is preferably high enough that the particles do not fuse together or sinter at temperatures likely to be encountered during transportation and storage. Preferably, the Tg is at least 50°C, more preferably at least 60°C.

Suitable epoxy resins include those containing aliphatic or aromatic backbones with oxirane functionality. They may be formed by the reaction of a diol and a halohydrin. Examples include the diglycidyl ether condensation polymers resulting from the reaction of epichlorohydrin with a bisphenol in the presence of an alkaline catalyst. 2,2-Bis(4-hydroxyphenyl)propane (Bisphenol A) is most commonly used but the bisphenols B, F, G, AF, S and H are also suitable. Generally, the bisphenol A type epoxies may be of the type 1 to type 9 form, with the low viscosity type 3 or less epoxy resins being preferred. By controlling the operating conditions and varying the ratio of the reactants, products of various equivalent weights can be made. The epoxy equivalent weight may be 400 to 2,250 AMU, preferably at least at least 550, more preferably at least 750 AMU, and preferably up to 1,100 AMU.

Epoxy resins are available from a wide variety of commercial sources. Useful epoxy resins include the bisphenol A epoxy resins available from Vantico as ARALDITE® GT-7004, GT-7013 (type 3), GT-7014, GT-7072 (type 2), GT-7074, GT-7097, and the like. Bisphenol A epoxy resins further include those available from Shell Chemical Company as EPON® 1007F, EPON® 1009F, EPON® 1004, and the like. Suitable epoxy resins further include the epoxy phenol novolac resins available from Vantico as ARALDITE® GT-7220, and the epoxy cresol novolac resins available from Vantico as ARALDITE® GT-6259.

Catalysts or curing agents are also useful to accelerate the cure of the above-described epoxy resin, and include, for example, imidazoles, tetrasubstituted organoborate salts as described above, polyamines, and phenolics.

Suitable imidazoles have the formula 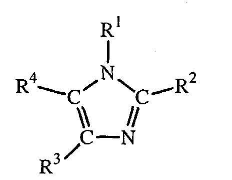 wherein R¹-R⁴ are each independently hydrogen, C₁-C₁₂ alkyl, C₆-C₁₈ aryl, C₇-C₁₈ arylalkyl, C₇-C₁₈ alkylaryl, or the like. Examples of suitable imidazoles include imidazole, 2-methyl imidazole, and 2-phenyl imidazole (which is commercially available from SKW Chemical Co.). Suitable adducts of such imidazoles with a bisphenol A epoxy resin are available commercially as, for example, EPON® P-101 from Resolution, and ARALDITE® HT-3261 from Vantico. Mixtures of imidazole adducts may be used.

Exemplary polyamine curing agents are ethylene diamine, isophorone diamine, cyclohexylenediamine, and a fluorinated diamines such as 4,4'-hexafluoroisopropylidene bis-aniline. In a preferred embodiment, the polyamines may be converted from their usual liquid state into a friable solid that may be pulverized. A friable, solid, low-temperature curing agent may be selected from a blocked polyamine such as an adduct of an epoxy resin having an equivalent weight of from 400 to 800 AMU and an aliphatic polyamine having a primary, secondary, and/or tertiary amino group. The epoxy resin portion of the adduct may be aromatic or aliphatic, as exemplified by the bisphenol-based resins mentioned above and the aliphatic analogs thereof, respectively. The cyclohexanol analog of the bisphenol Abased resin is available under the tradename KUKDO 4100. Higher molecular weight polyamines are preferred when epoxy resins having a low equivalent weight are employed. Suitable curing agents derived from polyamines having a primary amino group are available under the trade name HT 835 from Ciba-Geigy and ANCAMINE® 2337 XS from Air Products. An epoxy adduct of an aliphatic polyamine having a secondary amino group, such as ANCAMINE® 2014 AS from Air Products, may be preferred for white and light colored coatings.

Suitable phenolic curing agents having at least two terminal hydroxyl groups, and are exemplified by, but are not limited to bisphenol A endcapped diglycidyl ether of bisphenol A, which is the reaction product of diglycidyl ether of bisphenol A and bisphenol A. Examples of preferred phenolic curing agents for the epoxy resin components include those sold by the Dow Chemical Company under the trade names D.E.H.® 87, D.E.H.® 85, and D.E.H.® 84, all of which are believed to be bisphenol A endcapped diglycidyl ethers of bisphenol A. Other phenolic curing agents include phenol- and cresol-novolac curing agents sold by Georgia Pacific, Reichhold Chemicals, and Ciba-Geigy. The curing agent has a hydroxy equivalent weight (HEW) of 180 to 1000 AMU. Within this range, an HEW of at least 200 AMU may be preferred. Also within this range, an HEW of up to 450 AMU may be preferred.

Other catalysts that can be used to enhance the curing properties include dicyandiamide or o-tolyl biguanide. A suitable dicyandiamide curing agent is sold under the tradename DYHARD® 100M by SKW Chemicals. A suitable o-tolyl biguanide curing agent is sold under the tradename CASAMINE® OTB by Swan Chemical. Mixtures of catalysts with curing agents may be used. For example, a phenolic catalyst may be used in combination with an imidazole such as 2-methylimidazole or 2-phenylimidazole pre-dispersed at 0.05 to 5 weight percent, based on the total curing agent.

Another example of a suitable coating powder composition capable of cure at low temperatures comprises a GMA resin, a difunctional carboxylic acid curing agent, a catalyst, and optionally 1 to 10 parts per hundred parts of resin of a matte texturizing agent, for example polytetrafluoroethylene (PTFE), or mixtures of PTFE and low melting waxes such as paraffin

The GMA resin can be in the form of a copolymer that may be produced by copolymerizing between 20 and 100 weight percent (wt%) glycidyl acrylate or glycidyl methacrylate and between 0 and 80 wt% other non-acid functionalized alpha, beta-ethylenically unsaturated monomers as described above, such as methyl methacrylate, butyl methacrylate and styrene. Such a resin can have a weight average molecular weight of 3,000 to 200,000, preferably of 3,000 to 20,000, as determined by gel permeation chromatography. The GMA resin can be prepared under reaction conditions known in the art, as described, for example, in U.S. Patent No. 5,407,706. The viscosity of the GMA resin is preferably 10 to 500 poise, and most preferably from 30 to 3000 poise at 150°C, as determined by an ICI Cone and Plate Viscometer. One such resin that has an epoxy equivalent weight of 550-600 is available under the name ISOCRYL EP-550 from ESTRON Chemical, Calvert City, Kentucky. The GMA resin is present in the powder coating composition in an amount from 10 to 100 parts phr (parts by weight per hundred parts resin plus curing agent) and catalyst.

The curing agent for the GMA coating powder composition can be a multifunctional carboxylic acid monomer or polymer, for example a carboxylic acid functional polyester. Preferred curing agents include sebacic acid and polyanhydrides, both well known cross-linking agents that are commercially available. If sebacic acid is used in the formulation, it is present in an amount up to 25 parts phr (parts by weight per hundred parts of resin and curing agent). If a polyanhydride is employed, such as 1,12-dodecanedioic polyanhydride (e.g., VXL 1381, from Vianova), it may be present in an amount of up to 35 phr, preferably 20 to 30 phr. If desired, both cross-linking agents may be used together.

A suitable catalyst is an isopropyl imidazole bisphenol-A epoxy resin adduct, which is commercially available from Ciba-Geigy Corp. as HT-3261. The catalyst may be added to the formulation in an amount of 1 to 10 phr, preferably 2 to 5 phr (parts by weight per hundred parts resin plus curing agent) and catalyst.

Still another example of a suitable coating powder composition capable of cure at low temperatures comprises a hydroxy-functional polyester resin used with a blocked isocyanate-functional curing agent. The blocked isocyanate may be internally blocked, such as the uret dione type, or may be of the caprolactam-blocked type, for example isophorone diisocyanate. Hydroxy-functional polyester resins may also be used with an amine-formaldehyde condensate such as, for example, a melamine resin, a urea-formaldehyde resin, a glycouril formaldehyde resin, or hexamethoxymethylol melamine.

Mixtures of particulate film-forming polymeric resins may also be used. For example, a carboxy-functional polyester may be used with a carboxy-functional acrylic resin and a curing agent such as bis(beta-hydroxyalkylamide), which serves to cure both polymers. Alternatively, a carboxy-, hydroxy-, or epoxy-functionalized acrylic resin may be used with an epoxy resin or carboxy- or hydroxy-functional polyester resin, selected so as to be co-curing, cured with a single curing agent, or cured with more than one curing agent.

It has been found by the inventors hereof that use of a catalyst coated with or encapsulated in a polymeric material immiscible with the catalyst physically isolates the catalyst from the film forming polymer components. This physical barrier improves both the processability and the storage stability of the coating powders, which is particularly advantageous for low temperature cure coating powders.

Suitable encapsulants are selected based on the ability to protect the catalyst during processing and storage coupled with the ability to allow catalysis at the desired cure temperature; compatibility with the catalyst and the polymer resin components; compatibility with the powder coating (i.e., they do not significantly adversely affect the characteristics of the powder coating); availability; ease of use; cost; and like considerations.

One type of useful encapsulant is a wax such as a petroleum-derived alkane hydrocarbon wax. Such waxes are largely inert, and may be selected so as to have a melting point higher than the processing temperature of the coating powder but lower than the cure temperature. Such waxes may also be selected to as to contribute to the matte (i.e., low gloss) finish of the powder coating. An example of a commercially available wax-encapsulated catalyst is ESCAT FH-59, available from ESTRON Chemicals.

Another type of encapsulant is a thermoplastic polymer as set forth in U.S. Patent No. 6,224,793 B1 and WO 99/55454 to Hoffman and Bitler. Again, such thermoplastic polymers may be selected so as to have a melting point higher than the processing temperature of the coating powder but lower than the cure temperature. These materials find particular utility for organometallic catalysts.

These types of encapsulated catalysts can be prepared by first dispersing or dissolving the catalyst in the encapsulating material at a temperature sufficient to melt the encapsulating material but not to volatilize the catalyst. The appropriate temperature conditions and volatility of the catalyst can be determined by one skilled in the art. Droplets of the catalyst interspersed with encapsulating agent are formed by methods such as atomization of the particles or dropping the liquid on a rotating disk. The mixture is then cooled to solidify the encapsulating agent.

These methods are particularly suitable as they may be used with a wide variety of catalysts, for example the imidazoles and amines described above, stannous octoate, triphenyl tin hydroxide, aluminum acetylacetonate, dibutyl tin dilaurate, triphenyl tin hydroxide, aluminum acetylacetonate, dibutyl tin dilaurate, cyclamic acid, ethyltriphosphonium bromide, and zinc acetyl acetonate.

One type of encapsulated catalyst is the reaction product of a microgel that contains carboxylic acid functional groups with a nitrogen-containing catalyst as disclosed in U.S Patent No. 6,274,673 to Roth et al. Microgel is generally understood to mean macromolecules, the chain segments of which are cross-linked in the region of the individual agglomerates by covalent bridges. A preferred microgel for the preparation of encapsulated catalysts is a copolymer of at least one unsaturated carboxylic acid and at least one multifunctional cross-linker. An especially preferred microgel is a copolymer of at least one unsaturated carboxylic acid, at least one vinyl monomer that contains no carboxylic acid groups and at least one multifunctional cross-linker.

Exemplary unsaturated carboxylic acids include, for example, acrylic acid, methacrylic acid, 2-carboxyethyl acrylate and methacrylate, phthalic acid mono(2-acryloylethyl) ester, phthalic acid mono(2-methacryloylethyl) ester, maleic acid, maleic acid monomethyl ester, maleic acid monoethyl ester, fumaric acid, fumaric acid monomethyl ester, fumaric acid monoethyl ester, itaconic acid, cinnamic acid, crotonic acid, 4-vinylcyclohexanecarboxylic acid, 4-vinylphenylacetic acid and p-vinylbenzoic acid. Acrylic acid and methacrylic acid are preferred.

The monomer mixture used for the preparation of the microgels may contain one or more vinyl monomers that contain no carboxylic acid groups, for example butadiene and butadiene derivatives, acrylonitrile, methacrylonitrile, acrylic acid esters and amides, methacrylic acid esters and amides, vinyl ethers and esters, allyl ethers and esters, styrene and styrene derivatives. Preferred vinyl monomers that contain no carboxylic acid groups are alkyl esters, hydroxyalkyl esters, and glycidyl esters of unsaturated carboxylic acids, and styrene derivatives, for example methyl methacrylate, ethyl acrylate, 2-hydroxyethyl acrylate, 2-hydroxyethyl methacrylate, butyl methacrylate, 2-ethylhexyl methacrylate and styrene.

The multifunctional cross-linker contains at least two polymerizable C-C double bonds, and mixtures of at least two vinyl monomers, for example methacrylic acid and glycidyl methacrylate, that are capable of reacting with one another by way of additional functional groups during or after the polymerization reaction. Suitable crosslinkers are polyfunctional acrylic acid ester or methacrylic acid ester of an aliphatic, cycloaliphatic or aromatic polyol, an addition product of acrylic acid or methacrylic acid and a polyglycidyl compound, ethylene glycol diacrylate, ethylene glycol dimethacrylate, propylene glycol diacrylate, propylene glycol dimethacrylate, 1,4-butanediol dimethacrylate, polypropylene glycol diacrylate, polypropylene glycol dimethacrylate, 1,1,1-trimethylolpropane triacrylate, diglycidyl ether diacrylate of bisphenol A, diglycidyl ether dimethacrylate of bisphenol A, acrylic acid allyl ester, methacrylic acid allyl ester, divinylcyclohexane and divinylbenzene.

The microgel can be a copolymer comprising 2 to 70% by weight of at least one unsaturated carboxylic acid, 0 to 96% by weight of at least one vinyl monomer that contains no carboxylic acid groups and 2 to 70% by weight of at least one multifunctional cross-linker. Especially preferred microgels are copolymers comprising 5 to 50% by weight, especially 10 to 40% by weight, of at least one unsaturated carboxylic acid, 0 to 90% by weight, especially 30 to 85% by weight, of at least one vinyl monomer that contains no carboxylic acid groups and 5 to 50% by weight, especially 5 to 30% by weight, of at least one multifunctional cross-linker.

Suitable catalysts for the preparation of the microgel encapsulated catalysts are in principle any compound containing at least one basic nitrogen atom, preferably the catalysts described above, including imidazoles, amines, and polyamines such as triethylenetetramine or isophoronediamine. Preferably an amine, a polyamine, or an imidazole is used. Mixtures of amines and imidazoles are also suitable. Imidazole, 1-methylimidazole, 2-methylimidazole, 2-phenylimidazole, 2-isopropylimidazole, 2-dodecylimidazole, 2-heptadecylimidazole and 2-ethyl-4-methylimidazole. 2-Phenylimidazole, 2-isopropylimidazole, 2-dodecylimidazole, 2-heptadecylimidazole and 2-ethyl-4-methylimidazole are especially preferred catalysts. Other catalysts as mentioned above may also be used.

The reaction of the catalyst with the microgel is preferably carried out in solution. Preferred solvents are water and mixtures of water and water-miscible solvents, for example, methanol, ethanol, isopropanol, or acetone. The emulsion or suspension produced in the preparation of the microgel by emulsion polymerization can be used directly. The reaction temperatures are advantageously from 0 to 200°C, preferably from 10 to 100°C. The relative proportions of the starting materials can vary within wide limits.

Advantageously, however, the microgel that contains carboxylic acid groups and the catalyst are used in amounts such that the carboxyl groups are present in equimolar amounts or in excess in relation to basic nitrogen atoms. The number of basic nitrogen atoms, based on the number of carboxyl groups in the microgel, is preferably 5 to 100 mol%, especially 30 to 100 mol% and more especially 60 to 95 mol%.

The isolation of the microgel encapsulated catalyst in the form of a solid powder may be carried out by means of spray drying or lyophilization. Alternatively, however, it is possible to cause the emulsion/suspension to coagulate using known methods (addition of electrolyte, freezing out) and to isolate the resulting product in the form of a solid substance by filtration, which solid substance can be converted, as appropriate, into the desired particle size by further pulverization. It is also possible for the product to be obtained by concentrating the emulsion to dryness by evaporation and converting the residue into the desired form using known methods.

In addition to encapsulated catalysts, components such as curing agents or crosslinkers may also be encapsulated. Suitable encapsulated curing agents include isocyanate curing agents as well as triglycidylisocyanurate.

To form the coating powder composition, one or more encapsulated catalysts is combined and blended with a coating powder composition, for example by extrusion or dry blending. Where extrusion is used, the extrusion temperature is higher than the melting point of the encapsulant, but lower than cure temperature of the coating powder. The amount of encapsulated catalyst added to the coating powder composition will depend on a variety of factors, such as the particular resin system, the identity of the catalyst, the effectiveness of the catalyst, the identity of the encapsulant (e.g., its melting point), and the weight ratio of catalyst to encapsulant, and effect (if any) of encapsulant on the cured powder coating. Such amounts are accordingly readily determined by one of ordinary skill in the art without undue experimentation, based on the amounts of catalyst set forth above.

The coating powder composition may optionally comprise one or more additives known in the art. Such additives include, for example, flow control agents, dry flow agents, antioxidants, pigments, optical brighteners, extenders, combinations comprising at least one of the foregoing additives, and the like.

Flow control agents, sometimes called leveling agents, are useful to promote the formation of a continuous coating. Suitable flow control agents include polyacrylic esters, non-ionic fluorinated alkyl ester surfactants, non-ionic alkylarylpolyether alcohols, silicones, and the like, and combinations comprising at least one of the foregoing flow control agents. Flow control agents are generally liquids that have been converted to powder form by absorption onto silica-type materials. A preferred flow control agent is an acrylic polymer, available under the tradename RESIFLOW® P-67 by Estron Chemical, Inc.; a 2-hydroxy-1,2-diphenylethanone, sold under the tradename Benzoin by DSM, Inc.; the MODAFLOW® poly(alkyl acrylate) products available from Monsanto and the SURFYNOL® acetylenic diols (e.g., P200), available from Air Products, which contain hydroxyl, carboxyl or other functional groups. The functionalized flow additives also aid intercoat adhesion in the event that touch-up or repair of the powder coating is necessary. The flow control agents may be used singly or in combination. When present, the flow control agent may be used at an amount of 1 part by weight to five parts by weight, per 100 parts by weight of combined resin and curing agent when present.

Suitable dry flow agents include fumed silica (for example that sold under the tradename CAB-O-SIL® by Cabot Corporation) and fumed alumina, for example that sold under the tradename Aluminum Oxide C by Degussa Corporation. When present, the dry flow agent may be used in an amount of 0.05 weight percent to 0.5 weight percent, based on the total weight of the composition.

Pigments may be used to adjust color and opacity. Suitable pigments include, for example, titanium dioxide, carbon black, phthalocyanine blue, phthalocyanine green, quinacridone red, perylene red, isoindolone yellow, dioxazine violet, scarlet 3B lake, red 188 azo red, azo pigment yellow 83, iron oxide pigments, and the like. When present, the pigment may be used in an amount of up to 100 parts by weight per 100 parts by weight combined resin and curing agent when present.

Suitable extenders/fillers include calcium carbonate, barium sulfate, dolomite, wollastonite, talc, mica, and the like. When present, the extender may be used in an amount up to 120 parts by weight per 100 parts by weight combined resin and curing agent. Within this range, an extender amount of at least 10 parts by weight is preferred. Also within this range, an extender amount of up to 80 parts by weight is preferred.

Suitable antioxidants, which prevent discoloration of the powder coating, include, for example, sodium hypophosphite, tris-(2,4-di-t-butyl phenyl) phosphite (available as IRGAFOS® 168 from Ciba-Geigy), calcium bis([monoethyl(3,5-di-t-butyl-4-hydroxybenzyl)phosphonate] (available as IRGANOX® 1425 from Ciba-Geigy), and the like. Mixtures of antioxidants may be used. When present, antioxidants may be used in an amount of 0.5 to 2.0 parts by weight per 100 parts by weight of combined resin and curing agent when present.

Suitable optical brighteners include, for example, 2,2'-(2,5-thiophenediyl)bis(5-t-butylbenzoxazole), available as UVITEX® OB from Ciba-Geigy. When present, optical brighteners may be present at 0.1 to 0.5 parts by weight per 100 parts by weight of the resin and curing agent when present.

There is no particular limitation on the method used for forming the curable coating powder. Preferred methods include melt mixing, in which the dry ingredients are weighed into a batch mixer and are mixed with a medium intensity horizontal plow mixer or a lesser intensity tumble mixer. Mixing times may be from 1 to 3 minutes for the high intensity mixers to 30-60 minutes for the tumble mixers. The premix may then be further mixed and compounded as the resin is melted in either a single screw or a twin-screw extruder for 0.5 to 1 minute. The extrudate may be cooled quickly and broken into small chips suitable for grinding. The chips are ground to an appropriate particle size, generally to 120 micrometers, more typically 20 to 80 micrometers.

The curable coating powder may be used in coating glass, ceramics, and graphite-filled composites, as well as metallic substrates such as steel and aluminum. The composition is particularly useful in the coating of heat sensitive substrates such as plastics, paper, cardboard, and woods. Wood is herein defined as any lignocellulosic material, whether it comes from trees or other plants, and whether it be in its natural forms, shaped in a saw mill, separated into sheets and made into plywood, or chipped and made into particleboard, or whether its fibers have been separated, felted, or compressed. It is exemplified by lumber, panels, molding, siding, oriented strand board, hardboard, medium density fiberboard (MDF), and the like. Fiberboard having a pattern such as a simulated wood grain printed on its surface, rather than on a paper laminated to that surface, and a coating powder of this invention over said pattern has the appearance of natural wood. MDF is a particularly valuable coating substrate. A preferred substrate is engineered wood. Substrates may preferably have a moisture content of 3 to 10% by weight. The substrate may be treated to enhance its electrical conductivity. Thus, a porous substrate such as particleboard, pre-coated with a conductive liquid coating composition and cured, may also serve as a substrate for the coating powder. Although not necessary, the wood substrate may be heated to temperatures from 100°C to 200°C to drive moisture to the surfaces of the wood and facilitate formation of a thin water layer at the surface. The curable coating powder is also useful for coating plastic parts for the interior and exterior of automobiles.

The coating powder may be applied to substrates by conventional means, including electrostatic fluidized beds, electrostatic spray guns, triboelectric guns, and the like, in which the powder coating particles are electrostatically charged and the substrate is grounded or oppositely charged. The substrate is heated (and may optionally be pre-heated prior to application), to aid the melt, flow, and coalescence of the particles. Coating powders are generally applied to achieve a coating thickness of 1.0 mil (0.0245 millimeters, "mm") to 25 mils (0.102 mm), preferably at least 1.5 to 4 mils (0.038 to 0.1 mm) for metal substrates and 3.0 to 12 mils (0.0735 to 0.294 mm) for wooden substrates such as medium density fiberboard.

After application to the substrate, the applied powder coating is cured, generally at a temperature of 200 to 500°F (93 to 260°C), preferably 220 to 450°F (104 to 232°C), more preferably 250 to 400°F (121 to 204°C). Where low curing temperatures are desired, for example with wood substrates, cure is generally less than 325°F (163°C), more preferably less than 300°F (149°C), even more preferably less than 250°F (121°C). Another advantage of the curable compositions is their ability to produce matte and low gloss finishes over a wide range of curing temperatures. For example, such finishes may be produced over the entire temperature range of 300° to 400°F, more preferably 250°F to 400°F (93 to 204°C).

Exemplary embodiments of the invention are described in detail in the following Examples. Unless otherwise noted, all component amounts are expressed as phr (parts by weight per hundred parts by weight of the combined resin and curing agent when present.

Coating powders were formulated using the components set forth in Table 1.

**Table 1.**

| **Trade name** | **Source** | **Description** |
|---|---|---|
| Araldite GT 7072 | Vantico | Bisphenol-A epoxy resin |
| RSS-1407 | Shell | Bisphenol-A epoxy resin |
| Ruco 911U | Ruco | Uncatalyzed polyester resin |
| GMA 300 | Estron | Glycidyl acrylic resin |
| Exp Polymer 07 | BP Amoco | Acid functional polyester resin |
| Isocryl EP550 | Estron | Glycidyl acrylic resin |
| Sebacic Acid | ICC Chemical | Carboxylic diacid |
| Morflex 1000 | Morton International | Semicrystalline polyester |
| G-151 | Estron | Acid functional acrylic resin |
| Modaflow 2000 | Monsanto | Acrylic flow aid |
| Ancamine 2441 | Air Products | Amine cure agent |
| 2-Phenyl Imidazole | BASF | Catalyst (unencapsulated) |
| XB 5730 | Vantico | Encapsulated imidazole catalyst |
| C17Z | Eastech Chemical | Alkyl functional imidazole catalyst (unencapsulated) |
| Intelimer 7024 | Landec/Dock Resins | Crystalline polymer imidazole adduct |
| Intelimer 7124 | Landec/Dock Resins | Crystalline polymer imidazole adduct |
| ESCAT FH-59 | Estron | Wax-coated imidazole catalyst |
| Uvitex OB | Ciba | Optical brightener |
| Lanco 1900 MF | Lubrizol | Wax |
| Spheriglass 3000 | Potter Industries | Glass beads |
| Sphericell 110P8 | Potter Industries | Glass beads |
| TR 93 | Huntsman | TiO₂ Pigment |
| Yellow 910 | Bayer | Iron oxide pigment |
| Yellow 1420 | Bayer | Iron oxide pigment |
| Red RO 3097 | Bayer | Iron oxide pigment |
| Red 8098 | Bayer | Iron oxide pigment |
| Black 22 | Columbia | Carbon black pigment |
| Shepherd Black 1 | Shepherd | Black spinel pigment |
| Aluminum Oxide C | Degussa | Dry flow aid |
| Ceridust 9630F | Clariant | Dry flow aid |

Coating powders were prepared in accordance with Tables 2 or 3 below by initially blending by hand for 1 minute all components except the fumed alumina or fumed silica. The blend was then melt mixed in a 30 mm twin screw Baker Perkins extruder having a front zone maintained at 65.6°C (150°F) and an unheated rear zone. The extrudate was then chipped and ground with 0.1-0.2% by weight of fumed alumina or fumed silica to a fine powder that passed through a 140 mesh screen (U.S. Standard).

Properties of both the powder (fresh and heat aged at 32.2°C (90°F)) and the cured powder coating were assessed. Particularly important properties for commercially successful coatings are degree of cure, chemical resistance, storage stability, and appearance of the powder coating.

Degree of cure of the powder coating and chemical resistance may be determined by rubbing a methyl ethyl ketone (MEK) soaked cotton swab back and forth ("double rubs") 50 times on the coated panel with moderate pressure. The powder coating is rated on a scale of 1 to 5, wherein 5 = no rub off and 1 = heavy rub off. The tests below were conducted on coating powders that had not been heat aged.

Storage stability may be determined by measuring loss of flow (in both mm and %) of heat aged coating powders in a hot plate melt flow (HPMF) test. It is generally known that a loss of flow during storage, as determined in a HPMF test, will result in a change in final coating appearance. The coating may exhibit a higher level of orange peel or texture formation and/or a change in gloss as compared to the coating obtained from new (unstored) powder. Transportation and warehouse storage conditions are simulated by placing the powder in an oven set at 32.2 °C (90 °F) for seven days. After seven days, the powder is removed from the oven and loss of flow is measured by HPMF. In this test, a pellet of the heat aged powder having a diameter of 12.7 mm and a thickness of 6 mm is placed on a hot plate set at 375°F (190+/- 2°C) at an inclination angle of 35°. The pellet melts and runs down the plate. The length of the flow is measured in millimeters.

60° Gloss was measured per ASTM D 523, using a BYK Gardner Micro TRI gloss meter. Gloss was measured on samples that had not been heat aged.

Results are shown in Tables 2 and 3 below.

**Table 2**

| **Components** | **1*** | **2** | **3** | **4** | **5** |
|---|---|---|---|---|---|
| GT7072 | 95 | 95 | 95 | 95 | 95 |
| RSS-1407 | 5.0 | 5.0 | 5.0 | 5.0 | 5.0 |
| Modaflow 2000 | 1.0 | 1.0 | 1.0 | 1.0 | 1.0 |
| G-151 | 13 | 13 | 13 | 13 | 13 |
| Ancamine 2441 | 8.0 | 8.0 | 8.0 | 5.0 | 5.0 |
| 2-Phenyl imidazole | 0.5 | - | - | - | - |
| XB 5730 | - | 0.5 | 1.0 | 1.0 | 1.5 |
| Lanco 1900 MF | 1.0 | 1.0 | 1.0 | 1.0 | 1.0 |
| Spheriglass 3000 | 5.0 | 5.0 | 5.0 | 5.0 | 5.0 |
| TR 93 | 20 | 20 | 20 | 20 | 20 |
| Yellow 910 | 0.106 | 0.106 | 0.106 | 0.106 | 0.106 |
| Red 8098 | 0.036 | 0.036 | 0.036 | 0.036 | 0.036 |
| Black 22 | 0.036 | 0.036 | 0.036 | 0.036 | 0.036 |
| Aluminum Oxide C | 0.25% | 0.25% | 0.25% | 0.25% | 0.25% |
| Ceridust | 0.50% | 0.50% | 0.50% | 0.50% | 0.50% |

| **Properties** | **1*** | **2** | **3** | **4** | **5** |
|---|---|---|---|---|---|
| 60° Gloss | 20-25 | 10-15 | 15-20 | 6-12 | 5-10 |
| MEK (50 dbl rub) | 5 | 5 | 4.5 | 4 | 4 |
| HPMF loss (mm), heat aged | 10 | 7 | 6 | 5 | 4 |
| HPMF loss (%), heat aged | 12 | 9 | 7 | 6 | 5 |

| | | | | | |
|---|---|---|---|---|---|
| *Control | | | | | |

**Table 3**

| **Components** | **6*** | **7** | **8** | **9** | **10** | **11** | **12*** | **13** |
|---|---|---|---|---|---|---|---|---|
| Ruco 911U | 35 | 35 | 35 | 35 | 35 | 35 | - | - |
| GMA 300 | 30 | 30 | 30 | 30 | 30 | 30 | - | - |
| GT 7072 | - | - | - | - | - | - | 95 | 95 |
| Exp Polymer 07 | 35 | 35 | 35 | 35 | 35 | 35 | 5 | 5 |
| Modaflow 2000 | 2.0 | 2.0 | 2.0 | 2.0 | 2.0 | 2.0 | 1.0 | 1.0 |
| Sebacic Acid | 12 | 12 | 12 | 12 | 12 | 12 | - | - |
| Morflex 1000 | 8.0 | 8.0 | 8.0 | 8.0 | 8.0 | 8.0 | - | - |
| Uvitex OB | 0.05 | 0.05 | 0.05 | 0.05 | 0.05 | 0.05 | - | - |
| Isocryl EP550 | 15 | 15 | 15 | 15 | 15 | 15 | 15 | 15 |
| Shepherd Black | 0.02 | 0.02 | 0.02 | 0.02 | 0.02 | 0.02 | - | - |
| Red RO 3097 | 0.0008 | 0.0008 | 0.0008 | 0.0008 | 0.0008 | 0.0008 | - | - |
| Yellow 1420 | 0.002 | 0.002 | 0.002 | 0.002 | 0.002 | 0.002 | - | - |
| Sphericell 110P8 | 10 | 10 | 10 | 10 | 10 | 10 | - | - |
| TR 93 | 15 | 15 | 15 | 15 | 15 | 15 | - | - |
| C17Z | 1 | - | - | - | - | - | - | - |
| 2-Phenyl imidazole - | | - | - | - | - | - | 0.5 | - |
| XB 5730 | - | - | - | - | 1 | 2 | - | 0.5 |
| Intelimer 7024 | - | 3 | - | - | - | - | - | - |
| Intelimer 7124 | - | - | 3 | - | - | - | - | - |
| ESCAT FH-59 | - | - | - | 2 | - | - | - | - |
| Ancamine 2441 | | | | | | | 7 | 7 |
| Aluminum Oxide | 0.2% | 0.2% | 0.2% | 0.2% | 0.2% | 0.2% | 0.2% | 0.2% |

| **Properties** | **6*** | **7** | **8** | **9** | **10** | **11** | **12*** | **13** |
|---|---|---|---|---|---|---|---|---|
| 60° Gloss* | 15-25 | 10-15 | 10-15 | 10-15 | 10-15 | 10-15 | 85+ | 85+ |
| MEK | 3.5 | 4 | 4 | 3.5 | 4 | 4 | 4.5 | 4.5 |
| HPMF loss (mm) | 11 | 8 | 10 | 44 | 5 | 3 | 11 | 3 |
| HPMF loss (%) | 14 | 17 | 19 | 63 | 6 | 5 | 10 | 3 |

| | | | | | | | | |
|---|---|---|---|---|---|---|---|---|
| * Controls | | | | | | | | |

As may be seen by reference to the above tables, formulations incorporating the Vantico encapsulated catalyst XB 5730 (Examples 2-5, 10, 11, and 13) exhibit better 32.2°C storage stability as indicated by lower flow losses than the corresponding controls (Examples 1, 6, and 12), which contain unencapsulated catalysts. The Vantico catalyst XB 5730 also outperforms other latent commercially available catalysts (Examples 7-9).

Table 2 shows the effect of encapsulated catalyst on a polyester-acrylic hybrid powder coating formulation. The control, Example 6, uses C17Z, an unencapsulated alkyl functional imidazole catalyst. The Intelimer encapsulated catalysts contain about 33% of a functionalized imidazole according to their manufacturer, Landec/Dock Resins. Therefore the level of usage of Intelimer 7024 in Example 6 was 3 phr and the level of Intelimer 7124 in Example 8 was also 3 phr. ESCAT FH-59 contains about 50% of an imidazole, according to its manufacturer, ESTRON. Therefore it was incorporated at 2 phr in Example 9 (Table 3). Examples 10 and 11 use XB 5730. Of the encapsulated catalysts evaluated in this polyester-acrylic hybrid powder coating formulation, only XB 5730 showed any improvement in coating storage stability. As shown in Example 10, ESCAT FH-59 had a large, adverse effect on HPMF after storage (63% loss).

The microgel type encapsulated imidazole (XB 5730) was also tested in an epoxy-polyester hybrid powder coating formulation as shown in Example 13. A 3%, loss in HPMF was observed, compared to a 10% loss in flow for the comparative example using unencapsulated 2-phenyl imidazole (Example 12).

## Claims

1. A coating powder comprising a solid, particulate film forming polymer composition and an encapsulated catalyst.

2. The composition of claim 1 wherein the film forming composition comprises a carboxylic acid functional polymer and an epoxy.

3. The composition of claim 1 wherein the film forming composition comprises a polyester resin and an epoxy curative.

4. The composition of claim 1 wherein the catalyst contains a basic nitrogen atom.

5. The composition of claim 4 wherein the catalyst comprises a substituted or unsubstituted imidazole.

6. The composition of claim 5 wherein the encapsulated catalyst is present in an amount of about 0.1 to about 25 parts by weight per 100 parts by weight of the combined resin and any curing agent.

7. The composition of claim 1 wherein a catalyst encapsulant comprises a microgel.

8. A method of forming a powder coating comprising
contacting a substrate with a coating powder comprising a solid, particulate film forming polymer composition and an encapsulated catalyst to form a film; and
heating the coating powder to fuse and cure the powder to form a

9. The method of claim 8 wherein the substrate comprises wood, fiberboard, or plastic.

10. An article formed by the process of contacting a substrate with a coating powder comprising a solid, particulate film forming polymer composition and an encapsulated catalyst to form a film; and curing the film.
